# EUROPÄISCHE PATENTANMELDUNG

(11) **EP 1 746 402 A2**
(43) Veröffentlichungstag der Anmeldung: **24.01.2007**
(21) Anmeldenummer: 06117490.0
(22) Anmeldetag: 19.07.2006
(51) Int. Cl.: G01M 7/06, G01M 13/02, G01M 15/00

(54) **Simulations-Prüfstand sowie Verfahren zur Prüfung von Kraftfahrzeug-Bauteilen**

(30) Priorität: 23.07.2005 DE 102005034550
(71) Anmelder: MB-technology GmbH, 71063 Sindelfingen (DE)
(72) Erfinder: Chaieb, Hakim, 71115, Gärtringen (DE)
(74) Vertreter: von Kirschbaum, Alexander

(57) **Zusammenfassung**

Ein Simulations-Prüfstand für Kraftfahrzeug-Bauteile (12) weist eine Bauteilhalterung (10) zur Aufnahme des Bauteils (12) auf. Mit der sauteilhalterung (10) und/ oder dem Bauteil (12) sind Bewegungselemente (16) verbunden, durch die das Bauteil (12) zur Simulation vorgegebener Fahrsituationen bewegt werden kann. Ferner ist eine Steuereinrichtung (18) vorgesehen, die über Leitungen (20) mit den Bewegungselementen verbunden ist und diese steuert. Mit Hilfe einer Bewegungserfassungseinrichtung (24), wie einer Stereokamera, wird die aktuelle Bewegung des Bauteils (12) erfasst. Die erfassten Bewegungsdaten werden an eine Synchronisationseinreichung (28) übermittelt, wobei mit Hilfe der Anspassungseinrichtung ein Vergleich der aktuellen Bewegungsdaten mit den Fahrsimulationsdaten erfolgt und die von der Steuereinrichtung (18) ausgegebenen Steuerbefehle entsprechend angepasst werden.

## Beschreibung

Die Erfindung betrifft einen Simulations-Prüfstand für Kraftfahrzeug-Bauteile sowie ein Verfahren zur Prüfung von Kraftfahrzeug-Bauteilen.

Kraftfahrzeug-Bauteile, wie beispielsweise Bestandteile des Motors, des Fahrwerks, der Aufhängungen etc., die im Betrieb hohen Belastungen ausgesetzt sind, müssen hinsichtlich ihrer Lebensdauer bzw. Ausfallwahrscheinlichkeit überprüft werden. Hierzu werden in Simulations-Prüfständen die entsprechenden Kraftfahrzeug-Bauteile unter möglichst realen Bedingungen geprüft. Beispielsweise wird zur Überprüfung einzelner Bauteile eines Motors, wie beispielsweise in dem Motor vorhandene Lager und dgl., ein Kraftfahrzeug derart umgerüstet, dass bei Testfahrten die auf den Motor wirkenden Kräfte und Bewegungen erfasst werden. Hierzu ist es erforderlich, Kraft- und Bewegungsaufnehmer zu montieren. Dies ist zeit- und kostenintensiv und setzt bisweilen spezielle Konstruktionen voraus.

Die erfassten Fahrsituations-Daten werden sodann an eine Steuereinrichtung eines Simulations-Prüfstandes übertragen. Die Steuereinrichtung des Simulationsprüfstandes steuert auf Grundlage der Fahrsituationsdaten Bewegungselemente des Simulations-Prüfstandes, bei denen es sich beispielsweise um Hydraulikzylinder und dgl. handelt. Die Bewegungselemente
sind mit einer Bauteilhalterung zur Aufnahme des zu prüfenden Bauteils oder unmittelbar mit dem Bauteil verbunden und sollen die in der realen Fahrsituation auf das Bauteil einwirkenden Kräfte und Bewegungen simulieren. Da das Bauteil wie ein Motor im Prüfstand nicht mit sämtlichen Anbauteilen und Peripheriegeräten verbunden ist, unterscheidet sich das Bewegungsverhalten des Motors, insbesondere dessen Trägheit, im Prüfstand von derjenigen, wenn der Motor in dem Fahrzeug eingebaut ist. Dies führt zu ungenauen Simulationsergebnissen. Eine Verbesserung des Simulationsergebnisses kann hierbei durch eine Berücksichtigung der Peripheriegeräte durch Anpassung der Steuerdaten erfolgen. Die Anpassung der Steuerdaten setzt jedoch ein aufwändiges Simulationsmodel des zu überprüfenden Kraftfahrzeug-Bauteils voraus und ist daher äußerst aufwändig und teuer.

Aufgabe der Erfindung ist es, einen Simulations-Prüfstand für Kraftfahrzeug-Bauteile sowie ein Verfahren zur Überprüfung von Kraftfahrzeug-Bauteilen zu schaffen, durch das auf einfache Weise die Prüfergebnisse verbessert werden können.

Die Lösung der Aufgabe erfolgt erfindungsgemäß durch einen Simulations-Prüfstand gemäß Anspruch 1 bzw. ein Verfahren zur Überprüfung von Kraftfahrzeug-Bauteilen gemäß Anspruch 7.

Der erfindungsgemäße Simutations-Prüfstand für Kraftfahrzeug-Bauteile, der insbesondere für die Simulationsprüfung von Motoren und Fahrwerken geeignet ist, weist eine Bauteilhalterung zur Aufnahme des Kraftfahrzeug-Bauteils auf. Mit der Bauteilhalterung und/ oder dem Bauteil selbst sind Bewegungselemente zum Bewegen des Bauteils verbunden. Bei den Bewegungselementen handelt es sich beispielsweise um hydraulisch angetriebene Zylinder und dgl. Durch das Betätigen der Bewegungselemente soll das Bauteil zur Simulation entsprechend der vorgegebenen Fahrsituation belastet werden. Hierzu sind die Bewegungselemente mit einer Steuereinrichtung verbunden, die über Steuerbefehle die Bewegungselemente betätigt. Erfindungsgemäß ist eine Bewegungserfassungseinrichtung vorgesehen, durch die die Bewegung des Bauteils während der Prüfung erfasst wird. Zur Übertragung der entsprechenden aktuellen Bewegungsdaten ist die Bewegungserfassungseinrichtung mit der Steuereinrichtung verbunden. Durch das Vorsehen der Bewegungserfassungseinrichtung ist es möglich, mit Hilfe einer Anspassungseinrichtung die aktuellen Bewegungsdaten mit den vorgegebenen Fahrsituationsdaten zu vergleichen und eine entsprechende Anpassung der Steuerbefehle vorzunehmen. Es ist hierdurch auf sehr einfache Weise möglich, die Kräfte und die Bewegungen, die auf das Bauteil wirken, zu simulieren, wobei auf Grund der Rückkopplung auf einfache Weise eine Anpassung der Steuerbefehle erfolgen kann, so dass beispielsweise Einflüsse von Peripheriegeräten, die im Simulations-Prüfstand nicht mit dem Bauteil verbunden sind, berücksichtigt werden können.

Vorzugsweise ist die Bewegungserfassungseinrichtung von dem zu prüfenden Bauteil mechanisch entkoppelt. Dies hat den Vorteil, dass die Bewegungserfassungseinrichtung keinen Einfluss auf die Bewegung des Bauteils hat und auch die Datenaufnahme der Bewegungserfassungseinrichtung nicht verfälscht wird. Besonders bevorzugt ist es, als Bewegungserfassungseinrichtung ein optisches Messsystem vorzusehen. Hierbei kann es sich um Systeme handeln, die nach dem Prinzip der Photogrametrie arbeiten, Laser einsetzen oder durch mehrere, insbesondere zwei, Kameras sich überlagernde Bilder erzeugen. Besonders geeignet sind hierfür die Systeme K400, K500, K600 und K610 oder Wheeltracker der Firma Krypton.

Bei einer mechanisch entkoppelten Bewegungserfassungseinrichtung erfolgt vorzugsweise eine Beobachtung sowohl der Bauteilhalterung als auch des Bauteils durch die Bewegungserfassungseinrichtung. Hierzu weisen sowohl die Bauteilhalterung als auch das Bauteil selbst vorzugsweise jeweils eine oder mehrere geeignete Markierungen auf. Mit Hilfe einer Software können die beiden erfassten Bewegungen in Relation zueinander gesetzt werden.

Durch die Bewegungserfassungseinrichtung wird vorzugsweise optisch ein markanter Punkt des Bauteils beobachtet. Besonders bevorzugt ist es, ein Markierungselement mit dem Bauteil zu verbinden, wobei es sich bei dem Markierungselement beispielsweise um Leuchtdioden oder fluorsezierende Markierungselemente mit bestimmter Geometrie und/ oder Farbe handeln kann.

Um die Handhabung zu vereinfachen, ist es besonders bevorzugt, nur eine einzige Bewegungserfassungseinrichtung vorzusehen, die insbesondere die Bewegung von drei Markierungselementen erfasst. Hierbei wird besonders bevorzugt eine dreidimensionale Bewegung des Markierungselementes über eine einzige Bewegungserfassungseinrichtung erfasst. Eine derartige Bewegungserfassungseinrichtung kann beispielsweise zwei oder drei Kameras in einem gemeinsamen Gehäuse aufweisen, wobei sämtliche Kameras vorzugsweise auf das selbe Markierungselement gerichtet sind.

Gemäß des erfindungsgemäßen Verfahrens zur Überprüfung von Kraftfahrzeug-Bauteilen, wie insbesondere Motoren etc., wird vorzugsweise der vorstehend beschriebene Simulations-Prüfstand verwendet. Gemäß des Verfahrens werden zunächst Fahrsituationsdaten erfasst. Hierzu wird eine Probefahrt durchgeführt. Das Erfassen der Fahrsituationsdaten erfolgt hierbei vorzugsweise mit Hilfe einer optischen Bewegungs-Erfassungseinrichtung, wie vorstehend beschrieben, wobei insbesondere das System Wheeltracker der Firma Krypton geeignet ist. Die Erfassung der Fahrsituationsdaten erfolgt somit ohne einen erheblichen Umbauaufwand. Da keine Bewegungssensoren etc. an dem zu überprüfenden Bauteil vorgesehen werden müssen. Es ist lediglich erforderlich, beispielsweise eine oder mehrere Kameras zu installieren und ggf. ein Markierungselement an dem zu überprüfenden Bauteil zu befestigen.

Anschließend werden die erfassten Fahrsituations-Daten an eine Steuereinrichtung eines Simulations-Prüfstandes, insbesondere des vorstehend beschriebenen Simulations-Prüfstandes, übermittelt. Auf Grundlage der Fahrsimulationsdaten werden Steuerdaten bestimmt, insbesondere berechnet. Die Steuerdaten dienen zum Ansteuern von Bewegungselementen des Simulationsprüfstandes. Erfindungsgemäß erfolgt eine Erfassung der Bewegung des zu Prüfenden Bauteils während der Fahrt. Die so erfassten Bewegungsdaten werden an eine Steuereinrichtung übermittelt. Durch die Steuereinrichtung erfolgt insbesondere durch einen Vergleich der in der realen Fahrsituation erfassten Fahrsituationsdaten mit den Bewegungsdaten am Prüfstand ein Anpassen der Steuerdaten und somit eine Anpassung der durch die Bewegungselemente hervorgerufenen Bewegung des Bauteils.

Vorzugsweise wird sowohl zur Erfassung der Fahrsituationsdaten als auch zur Erfassung der Bewegungsdaten im Prüfstand die gleiche Bewegungserfassungseinrichtung bzw. der gleiche Typ von Bewegungserfassungseinrichtung verwendet. Hierdurch ist der Datenvergleich deutlich vereinfacht.

Nachfolgend wird die Erfindung an Hand einer bevorzugten Ausfllhrungsform unter Bezugnahme auf die anliegende Zeichnung näher erläutert.

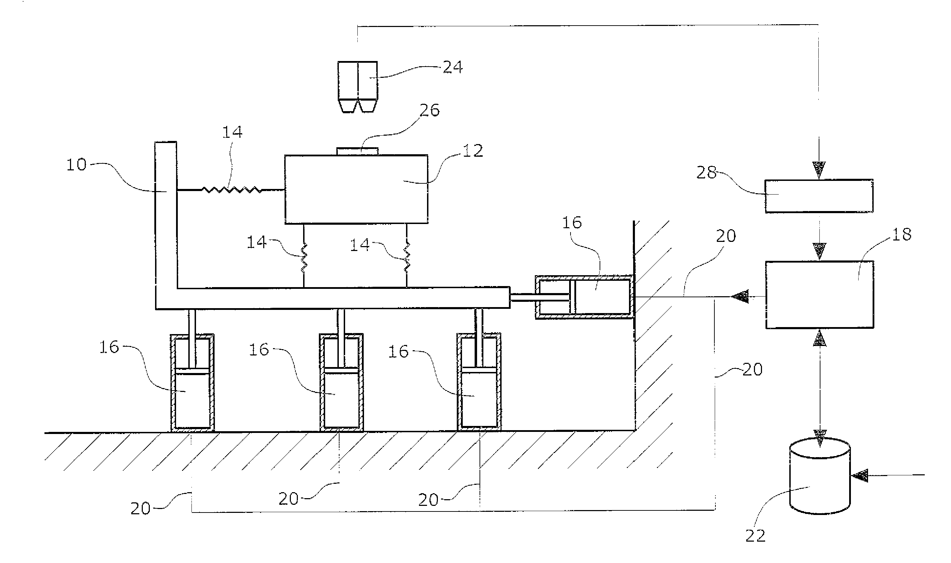

Die Zeichnung zeigt eine schematische Skizze eines erfindungsgemäßen Simulations-Prüfstands.

Der Simulations-Prüfstand weist eine Bauteilhalterung 10 auf, die zur Aufnahme eines Bauteils 12, wie beispielsweise eines Kraftfahrzeug-Motors, dient. Das Bauteil 12 ist über Dämpfungs- bzw. Schwingungselemente 14 mit der Bauteilhalterung 10 verbunden. Um die Bauteilhalterung 10 und damit auch das Bauteil 12 zur Simulation in dreidimensionale Bewegungen zu versetzen, sind mehrere Bewegungselemente 16 vorgesehen, die im dargestellten Ausführungsbeispiel mit der Bauteilhalterung 10 verbunden sind. Im dargestellten Ausführungsbeispiel handelt es sich bei den Bewegungselementen 16 um Hydraulikzylinder.

Ferner weist der Simulations-Prüfstand eine Steuereinrichtung 18 auf, die elektrisch und/ oder pneumatisch mit den Bewegungselementen 16 verbunden ist. Mit Hilfe der Steuereinrichtung 18 können die einzelnen Bewegungselemente 16 unterschiedliche angesteuert werden, so dass eine dreidimensionale Bewegung des Bauteils 12 simuliert werden kann.

Die Ansteuerung der Bewegungselemente 16 erfolgt auf Grund von beispielsweise zuvor in Probefahrten ermittelten und in eine Datenbank 22 eingespeicherten Fahrsituationsdaten. Selbstverständlich ist es auch möglich, unterschiedliche Fahrsimulationsdaten von unterschiedlichen Probefahrten zu kombinieren,

Da das Bauteil 12 in dem Simulations-Prüfstand beispielsweise nicht mit Peripheriegeräten verbunden ist und insofern die aufgebrachten Bewegungen nicht eins zu eins Bewegungen in der Realität entsprechen, ist eine Bewegungserfassungseinrichtung 24, wie beispielsweise eine Stereo-Kamera, vorgesehen. Die Bewegungserfassungseinrichtung beobachtet ein oder mehrere Markierungselemente 26, die auf dem Bauteil 12 angebracht sind. Durch die Bewegungserfassungseinrichtung erfolgt eine dreidimensionale Aufnahme der Bewegung der Markierungselemente 26 und somit des Bauteils 12. Die entsprechenden Daten werden an eine Anspassungseinrichtung 28, die auch ein Bestandteil der Steuerungseinrichtung 18 sein kann, übermittelt und ausgewertet. Insbesondere erfolgt in der Anspassungseinrichtung ein Vergleichung der von der Bewegungserfassungseinrichtung 24 aufgenommenen aktuellen Bewegungsdaten des Bauteils 12 in dem Simulations-Prüfstand mit den in Probefahrten ermittelten Fahrsituationsdaten, die in der Datenbank 22 gespeichert sind. Durch ein geeignetes in der Steuereinrichtung vorgesehenes Softwaremodul werden die Abweichungen zwischen den Soll- und den Ist-Daten ermittelt und die Ansteuerung der Bewegungselemente 16 angepasst. Dieses Anpassungsverfahren kann nach verschiedenen Schleifen erfolgen, so dass es mit Hilfe des erfindungsgemäßen Simulations-Prüfstandes möglich ist, die Bewegung des Bauteils 12 sehr exakt zu simulieren und eine zuverlässige Wiedergabe des Straßensignals zu erreichen.

## Patentansprüche

1. Simulations-Prüfstand für Kraftfahrzeug-Bauteile (12), insbesondere Motoren und Achsen, mit
einer Bauteilhalterung (10) zur Aufnahme des Bauteils (12),
mit der Bauteilhalterung (10) und/ oder dem Bauteil (12) verbundenen Bewegungselementen (16) zum Bewegen des Bauteils (12) zur Simulation vorgegebener Fahrsituationen,
einer mit den Bewegungselementen (16) verbundenen Steuereinrichtung (18) zur Betätigung der Bewegungselemente (16) mittels Steuerbefehlen,
einer mit der Steuereinrichtung (18) verbundenen Bewegungserfassungseinrichtung (24) zur Erfassung der Bewegung des Bauteils (12) und
einer mit der Bewegungserfassungseinrichtung (24) verbundenen Anpassungseinrichtung (28) zur Anpassung der erfassten aktuellen Bewegungen an Bewegungen vorgegebener Fahrsituationen durch Anpassen der Steuerbefehle.

2. Simulations-Prüfstand nach Anspruch 1, **dadurch gekennzeichnet, dass** die Bewegungserfassungseinrichtung (24) mechanisch von dem Bauteil (12) entkoppelt ist.

3. Simulations-Prüfstand nach Anspruch 1 oder 2, **dadurch gekennzeichnet, dass** die Bewegungserfassungseinrichtung (24) ein optisches Messsystem aufweist.

4. Simulations-Prüfstand nach einem der Ansprüche 1 - 3, **dadurch gekennzeichnet, dass** die Bewegungserfassungseinrichtung (24) die Bewegung eines mit dem Bauteil (12) verbundenen Markierelementes (26) erfasst.

5. Simulations-Prüfstand nach einem der Ansprüche 1- 4, **dadurch gekennzeichnet, dass** eine einzige Bewegungserfassungseinrichtung (24) insbesondere in Verbindung mit einem einzigen Markierelement (26) eine dreidimensionale Bewegung des Bauteils (12) erfasst.

6. Simulations-Prüfstand nach einem der Ansprüche 1 - 5, **dadurch gekennzeichnet, dass** die Anpassungseinrichtung (28) in Abhängigkeit eines Soll-Ist-Vergleichs angepasste Steuerbefehle berechnet.

7. Verfahren zur Prüfung von Kraftfahrzeug-Bauteilen (12), insbesondere in einem Simulations-Prüfstand nach einem der Ansprüche 1. - 6, mit den Schritten:
Erfassen von Fahrsituationsdaten in einer Probefahrt,
Übermitteln der Fahrsituationsdaten an eine Steuereinrichtung (18),
Bestimmen von Steuerdaten aus den Fahrsituationsdaten,
Ansteuern von Bewegungselementen (16) des Simulations-Prüfstandes durch die Steuerdaten,
Erfassen von Bewegungsdaten des zu prüfenden Bauteils und
Anpassen der Steuerdaten in Abhängigkeit der erfassten Bewegungsdaten zur Synchronisation der Bewegungsdaten mit den Fahrsimulationsdaten.

8. Verfahren nach Anspruch 7, bei welchem die Fahrsimulationsdaten mittels einer optischen Bewegungseinrichtung ermittelt werden.

9. Verfahren nach Anspruch 7 oder 8, **dadurch gekennzeichnet, dass** die Bewegungsdaten mittels einer optischen Bewegungserfassungseinrichtung (24) ermittelt werden.

10. Verfahren nach einem der Ansprüche 7 - 9, **dadurch gekennzeichnet, dass** die Bewegungserfassungseinrichtung (24) die Bewegung eines auf dem Bauteil (12) befestigten Markierelementes (26) erfasst.

11. Verfahren nach einem der Ansprüche 7 - 10, bei welchem die Schritte
- Bestimmung von Steuerdaten aus der Fahrsituation,
- Ansteuern von Bewegungselementen des Simmulations-Prüfstands durch die Steuerdaten und
- Erfassen von Bewegungsdaten des zu prüfenden Bauteils
in einer Schleife insbesondere mehrfach wiederholt werden.
